# EUROPEAN PATENT APPLICATION

(11) **EP 2 942 281 A1**
(43) Date of publication of application: **11.11.2015**
(21) Application number: 14275104.9
(22) Date of filing: 07.05.2014
(51) Int. Cl.: B64D 37/06, B64D 37/32, B60K 15/03, F41H 5/04

(54) **Liquid storage tank**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A liquid storage tank (16), for example an aircraft fuel tank, comprising a tank wall enclosing a liquid storage space (14), and a tie assembly located at least partially within the liquid storage space (14). The tie assembly comprises an elongate member (20), for example a wire or cable, and a plurality of attachment devices (22) fixed to an inner surface of the tank wall. The elongate member (20) includes a plurality of spaced part points along its length, each of the spaced apart points being fixed to a respective attachment device (22) such that the tie assembly resists outward deformation of the tank wall.

## Description

### FIELD OF THE INVENTION

The present invention relates to liquid storage tanks.

### BACKGROUND

A high speed projectile on impact with and penetration into a liquid containing tank generates very high pressure in the liquid. This phenomenon, known as hydrodynamic ram, typically includes the generation of shock waves and subsequent pressure pulses in the liquid. These pressures, combined with the penetration damage from the projectile, can cause damage to the tank structure and frequently are the cause of catastrophic failure of the tank. The hydrodynamic ram pressure pulses are intense but of short duration which propagate through the liquid in the tank.

There is thus a need for means for reducing hydrodynamic ram pressure in the liquid in such a tank and for a generally improved tank which has an improved ability to sustain projectile impact without catastrophic failure.

### SUMMARY OF THE INVENTION

In a first aspect, the present invention provides a liquid storage tank comprising a tank wall enclosing a liquid storage space, and at least one tie assembly located at least partially within the liquid storage space. The tie assembly comprises an elongate member, and a plurality of attachment devices fixed to an inner surface of the tank wall (such that they are spaced apart from one another). The elongate member includes a plurality of spaced part points along its length, and each of the spaced apart points is fixed to a respective attachment device such that the tie assembly resists outward deformation of the tank wall.

The elongate member may comprise one or more wires.

The elongate member may comprise a plurality of wires that are coupled together so as to form a cable.

The elongate member may be made of metal or poly-paraphenylene terephthalamide.

The tie assembly may be configured to exert an inward force on the tank wall.

The elongate member may be substantially normal to the tank wall at a point at which the elongate member is fixed to the tank wall.

The liquid storage tank may further comprise one or more further a tie assemblies located at least partially within the liquid storage space. Each further tie assembly may comprise a plurality of further attachment devices fixed to an inner surface of the tank wall, and a further elongate member including a plurality of spaced part points along its length, each of those spaced apart points being fixed to a respective further attachment device such that the further tie assembly resists outward deformation of the tank wall.

The tie assembly and one or more further tie assemblies may be in a spaced apart relation within the tank. The tie assembly and further tie assemblies may be more closely spaced at or proximate to the centre of the liquid storage tank. The tie assembly and further tie assemblies may be more closely spaced at or proximate to the edges of the liquid storage tank.

Multiple attachment devices may be formed on a common elongate bracket which may be fixed to the internal surface of the tank wall.

The total cavity volume of the tie assembly and/or further tie assemblies in the liquid storage space may be less than or equal to 5% by volume of the liquid storage space volume.

The tank may be an aircraft fuel tank.

In a further aspect, the present invention provides a vehicle (e.g. an aircraft) comprising a liquid storage tank (e.g. an aircraft fuel tank located in the wing of the aircraft) according to the preceding aspect.

In a further aspect, the present invention provides a method of installing a tie assembly in a liquid storage tank, the tie assembly comprising an elongate member and a plurality of attachment devices. The method comprises: fixing each attachment device to an inner surface of a tank wall of the a liquid storage tank, and fixing the elongate member to spaced apart attachment devices, thereby installing the tie assembly in the liquid storage tank such that the tie assembly resists outward deformation of the tank wall.

The elongate member may comprise one or more wires. The method may further include, after fixing the elongate member to spaced apart attachment devices, tightening the elongate member such that the tie assembly exerts an inward force on the tank wall.

### BRIEF DESCRIPTION OF THE DRAWINGS

Figure 1 is a schematic illustration (not to scale) of an exploded view of an example aircraft wing;
Figure 2 is a schematic illustration (not to scale) showing a cross section through a fuel tank in the aircraft wing; and
Figure 3 is a schematic illustration (not to scale) illustrating effects of a projectile impacting with an external surface of the fuel tank.

### DETAILED DESCRIPTION

In the following description, like reference numerals refer to like elements.

The following description is based on embodiments of the invention and should not be taken as limiting the invention with regard to alternative embodiments that are not explicitly described herein. Structural material types and methods of construction provided herein are examples only.

It will be appreciated that relative terms such as top and bottom, upper and lower, and so on, are used merely for ease of reference to the Figures, and these terms are not limiting as such, and any two differing directions or positions and so on may be implemented.

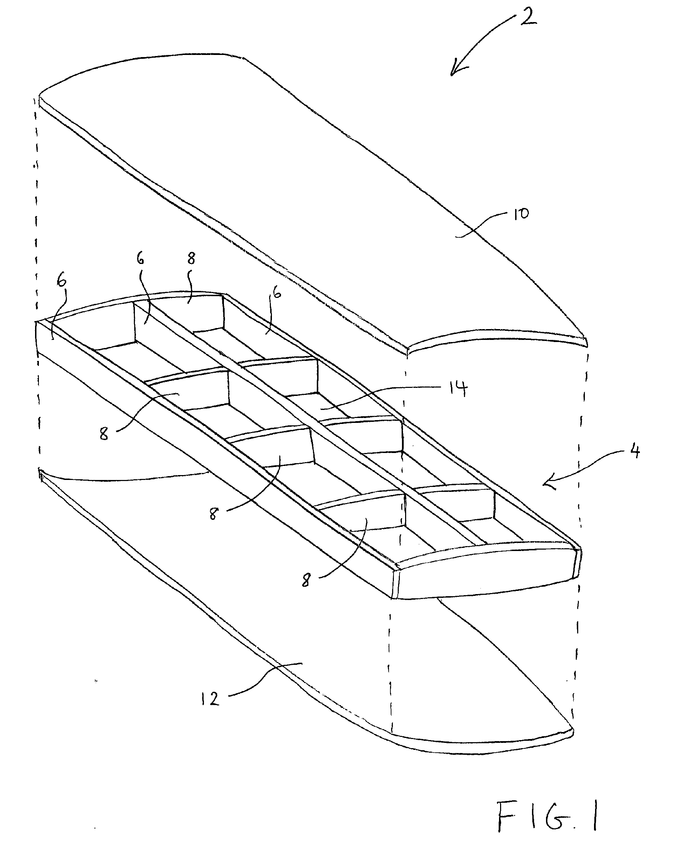

Figure 1 is a schematic illustration (not to scale) of an exploded view of an example aircraft wing 2 in which a hydrodynamic ram reducing assembly is implemented.

The aircraft wing 2 comprises a substructure 4 comprising a plurality of spars 6 and ribs 8. The spars 6 are spaced apart from one another and are aligned along the length of the aircraft wing 2. The spars 6 are coupled together by the spaced apart ribs 8 which are substantially perpendicular to the spars 6. The spars 6 and ribs 8 are connected together by fasteners (not shown in the Figures). The spars 6 and ribs 8 are made of carbon fibre composite (CFC) material, i.e. a composite material comprising a polymer matrix reinforced with carbon fibres. In other examples, the spars 6 and ribs 8 are made of a different appropriate material, for example, aluminium.

The aircraft wing 2 further comprises external skins, namely an upper skin 10 and a lower skin 12. The upper skin 10 comprises a plurality of panels made of CFC material. The upper skin 10 is attached to an upper surface of the substructure 4 by fasteners (not shown in the Figures). The lower skin 12 comprises a plurality of panels made of CFC material. The lower skin 12 is attached to a lower surface of the substructure 4 by fasteners (not shown in the Figures). The external skin 10, 12 may each be, for example, 8mm thick.

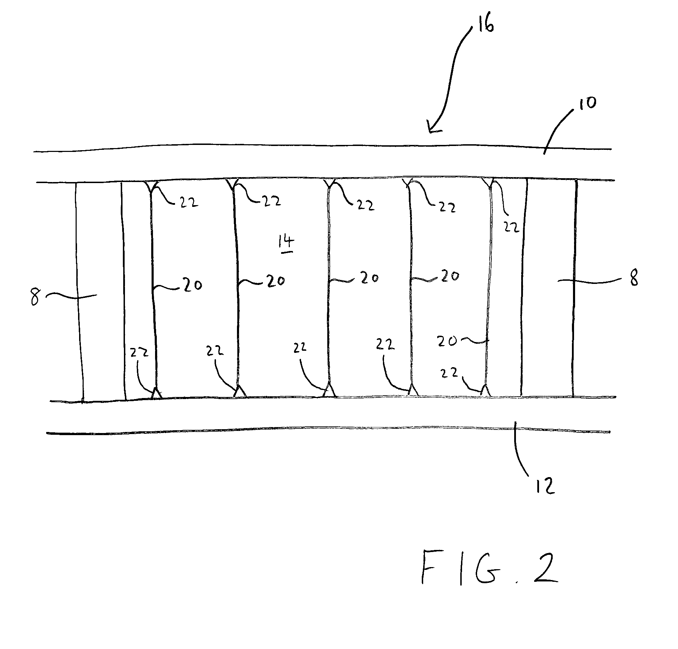

When the substructure 4 and the external skins 10, 12 are attached together (and, for example, bonded with a sealant), a cavity defined by the substructure 4 and skins 10, 12 is formed. Such a cavity is used as a fuel tank for storing aircraft fuel and is indicated in Figure 1 by the reference numeral 14. The fuel tank is described in more detail later below with reference to Figure 2.

The aircraft wing 2 further comprises a leading edge structure, a trailing edge structure and a wing tip structure, which are not shown in Figure 1 for reasons of clarity.

Figure 2 is a schematic illustration (not to scale) showing a cross section through the fuel tank 16 in the aircraft wing 2 taken parallel to the length of the aircraft wing 2 (i.e. perpendicular to a longitudinal or roll axis of an aircraft to which the wing 2 is attached).

In this embodiment, the outer walls of the fuel tank 16 are provided by spars 6, ribs 8, and the upper and lower skins 10, 12. Aircraft fuel is stored in the cavity 14 defined by the fuel tank outer walls.

In this embodiment, the fuel tank 16 comprises a plurality of tie assemblies within the fuel storage cavity 14.

The tie assemblies interconnect opposite walls of the fuel tank 16. In particular, in this embodiment, the tie assemblies interconnect the upper skin 10 and the lower skin 12.

In this embodiment, each tie assembly comprises an elongate cable 20 and two attachment devices 22.

In this embodiment, the cables 20 comprise a plurality of separate wires that are bonded, twisted, or braided together so as to form a single assembly. In this embodiment, the wires of the cables 20 are made of a material that is nonreactive with the fuel in the fuel tank 16 and has a high tensile strength, for example, stainless steel. In other embodiments, one or more wires of the cables 20 may be made of a different appropriate material such as an aramid or para-aramid synthetic fibre such as poly-paraphenylene terephthalamide which is more common known as Kevlar (TM). In other embodiments, one or more of the cables 20 may be replaced by a different structure such as a rigid rod, or a strip of material.

In this embodiment, the cables 20 have a thickness of between 2mm and 10mm. However, in other embodiments, one or more of the cables 20 may have a different appropriate thickness.

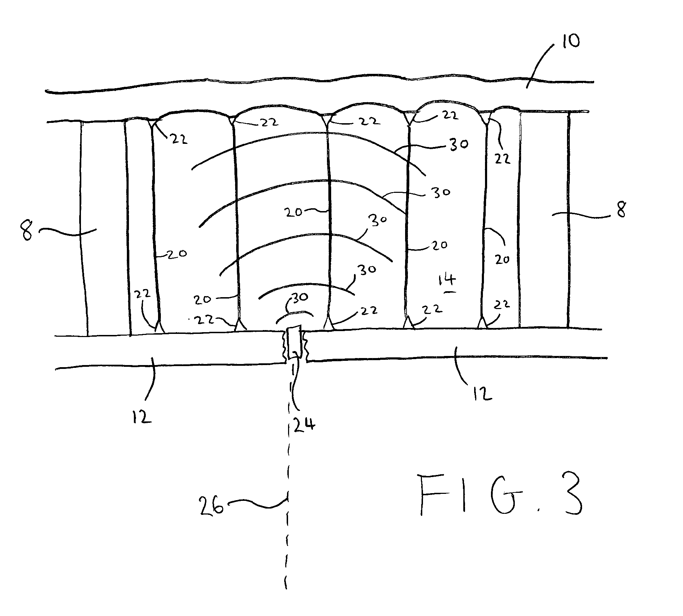

In this embodiment, the cables 20 are taut such that the cables 20 exert a nominal inwards force on the external skins 10, 12. This inwards force advantageously tends to oppose the outward bowing of the skins that may be caused by impact of a projectile with the fuel tank 16 as described in more detail later below with reference to Figure 3. The tie assemblies may be installed in the fuel tank 16 by firstly attaching the attachment devices 22 to the fuel tank walls, coupling a cable 20 between pairs of attachment devices 22, and subsequently tightening the cables 20 to pull them taut.

In this embodiment, the tie assemblies are arranged in the fuel tank 16 such that the cables 20 are substantially normal to the upper and lower skins 10, 12.

In this embodiment, the attachment devices 22 of each tie assembly are fixedly attached to opposite ends of the cable 20 of that tie assembly. The attachment devices 22 of each tie assembly attach the cable 20 of that tie assembly to opposite walls of the fuel tank 16 i.e. to the upper and lower skins 10, 12. The attachment devices 22 may be attached to the skins 10, 12 by any appropriate means. For example, an attachment device 22 may be glued or welded to the internal surfaces of the tank walls. Alternatively, an attachment device 22 may be embedded within, or integrally formed with, the tank walls. For example, the attachment devices may be stitched into the CFC panels that form the skins 10, 12 such that the attachment devices 22 are embedded within the skins 10, 12. Alternatively, an attachment device 22 may include a fastener that passes through a skin 10, 12 from the external surface of the fuel tank wall to the internal surface of the fuel tank wall.

In this embodiment, the attachment devices 22 are separate, independent devices. However, in other embodiments, multiple attachment devices 22 may be formed on a common elongate bracket which may be fixed to the internal surface of the fuel tank 16 by any appropriate means, such as gluing or welding.

In this embodiment, the tie assemblies are substantially equally spaced apart between the ribs 8. Also, the tie assemblies are substantially equally spaced apart between the spars 8. However, in other embodiments, the tie assemblies may be arranged differently, i.e. the spacings between the tie assemblies may vary along the tank 16. For example, in some embodiments, the tie assemblies are more closely spaced towards the centre of the fuel tank 16, e.g. in the region that is equidistant from the ribs 8/spars 6. In some situations, outward bowing of the walls of the fuel tank 16 such as may be caused by a projectile impacting a wall of the fuel tank 16 (which is described in more detail later below with reference to Figure 3) tends to be greatest in this region and so having a higher concentration of tie assemblies in this region advantageously tends to reduce or eliminate this bowing. In some embodiments, the tie assemblies are more closely spaced along the edges of the fuel tank 16, e.g. in the regions proximate to the ribs 8/spars 6. Thus there is a higher concentration of tie assemblies in the regions in which the skin 10, 12 may detach from the spars 6 or ribs 8, and so the likelihood of catastrophic failure of the fuel tank 16 may be further reduced or eliminated.

As will now be described in more detail, the tie assemblies are operable to reduce damage resulting from hydrodynamic ram pressures in the fuel contained within the fuel tank 16.

Figure 3 is a schematic illustration (not to scale) illustrating effects of a projectile 24 impacting with the lower skin 12 of the fuel tank 16. The path of the projectile through the lower skin 12 is indicated in Figure 3 by the reference numeral 26.

The projectile 24 may be any appropriate projectile or foreign object such as a bullet, warhead fragment, a vehicle part, a rock, a maintenance tool, hail, ice, a bolt, etc. An example projectile has a weight of approximately 3.5g, is substantially spherical in shape having a diameter of approximately 9.5mm, and travels with a velocity of 1500m/s. A further example projectile is a 44g 12.5mm bullet that travels with a velocity of 500m/s.

In this example, the projectile 24 initially impacts with an external surface of the lower skin 12 and travels through the lower skin 12. The projectile 24 causes high strain rate shear damage to the lower skin 12 resulting in a hole in the lower skin 12 approximately the size of the projectile 24.

In this example, on piercing the lower skin 12, the projectile 24 impacts with the fluid within the cavity 14, thereby generating one or more high pressure shock waves 30 within the fluid. The shockwaves 30 travel through the fluid in the fuel tank 16 and impinge on the upper skin 10, thereby exerting an outwards force on the upper skin 10 which acts so as to cause the upper skin 10 to bow outwards. In conventional systems, this outward bowing of the upper skin may be sufficient to cause the upper skin 10 to decouple from the spars 6 or ribs 8, resulting in a catastrophic failure of the fuel tank 16 and loss of the aircraft. However, the tie assemblies are arranged to resist outward bowing of the upper skin 10. In this embodiment, this is achieved by coupling together the upper and lower skins 10, 12 such that outward movement of one skin relative to the other skin is opposed or prevented. Thus, the likelihood of damage to the walls of the fuel tank 16 (e.g. decoupling of the external skins 10, 12 from the spars 6 or ribs 8) tends to be reduced.

In this example, as the projectile 24 passes through the fluid in the fuel tank 16, a cavitation "wake" may form behind the projectile 24, i.e. a region of low pressure (e.g. a vapour or a vacuum) may form in the wake of the projectile 24. This causes a fluid displacement and an increase in the pressure of the fluid in the fuel tank 16. This increase in pressure in the fluid may be sufficient to cause the upper skin 10 to bow outwards. In conventional systems, this outward bowing of the upper skin may be sufficient to cause the upper skin 10 to decouple from the spars 6 or ribs 8, resulting in a catastrophic failure of the fuel tank 16 and loss of the aircraft. However, the tie assemblies are arranged to resist outward bowing of the upper skin 10. Thus, the likelihood of damage to the walls of the fuel tank 16 (e.g. decoupling of the external skin 10, 12 from the spars 6 or ribs 8) tends to be reduced.

An advantage provided by the above described tie assemblies is that hydrodynamic ram damage to a fuel tank caused by an object impacting with an external surface of the fuel tank tends to be reduced or eliminated. Thus, the likelihood of catastrophic failure of the fuel tank structure and corresponding aircraft loss tends to be reduced or eliminated. The tie assemblies tend to provide that the fuel tank is better able to accommodate the hydrodynamic ram pressures introduced by the impact of a projectile with the walls of the fuel tank.

Advantageously, the tie assemblies occupy a relative low volume within the fuel tank. In particular, the tie assemblies in combination occupy less than 5% of the total internal volume (i.e. capacity) of the fuel tank 16. In other embodiments, the tie assemblies occupy a different proportion of the fuel tank capacity.

The above described tie assemblies advantageously tend to be relative easy and cheap to manufacture.

The above described tie assemblies tend to be relatively easy to retrofit to existing aircraft fuel tanks.

The above described tie assemblies tend to provide protection against hydrodynamic ram damage whilst occupying a relatively small amount of the fuel tank's capacity.

The above described tie assemblies tend to be relatively lightweight so as not to be a significant burden to the aircraft.

In the above embodiments, the tie assemblies are implemented in an aircraft wing fuel tank. However, in other embodiments, the tie assemblies are used in a different type of container for containing fluid. In some embodiments, one or more walls of the container may be made of a different material to that described above.

In the above embodiments, the tie assemblies interconnect the upper skin and the lower skin and are arranged in the fuel tank such that the cables are substantially normal to the upper and lower skins. However, in other embodiments, one or more of the tie assemblies interconnect a different pair of fuel tank walls. Also, one or more of the tie assemblies may be arranged in the fuel tank such that one or more cables have a different orientation within the fuel tank. For example, one or more tie assembly may interconnect the ribs or spars that form the tank walls and may be arranged in the fuel tank such that the cables are substantially normal to the ribs or spars.

## Claims

1. A liquid storage tank (16) comprising:
a tank wall enclosing a liquid storage space (14); and
a tie assembly located at least partially within the liquid storage space (14), the tie assembly comprising:
an elongate member (20); and
a plurality of attachment devices (22) fixed to an inner surface of the tank wall; wherein
the elongate member (20) includes a plurality of spaced part points along its length, each of the spaced apart points being fixed to a respective attachment device (22) such that the tie assembly resists outward deformation of the tank wall.

2. A liquid storage tank (16) according to claim 1, wherein the elongate member (20) comprises one or more wires.

3. A liquid storage tank (16) according to claim 2, wherein the elongate member (20) comprises a plurality of wires that are coupled together so as to form a cable.

4. A liquid storage tank (16) according to any of claims 1 to 3, wherein the elongate member (20) is made of metal or poly-paraphenylene terephthalamide.

5. A liquid storage tank (16) according to any of claims 1 to 4, wherein the tie assembly is configured to exert an inward force on the tank wall.

6. A liquid storage tank (16) according to any of claims 1 to 5, wherein the elongate member (20) is substantially normal to the tank wall at a point at which the elongate member (20) is fixed to the tank wall.

7. A liquid storage tank (16) according to claim any of claims 1 to 6 and further comprising:
one or more further a tie assemblies located at least partially within the liquid storage space (14), each further tie assembly comprising:
a plurality of further attachment devices (22) fixed to an inner surface of the tank wall; and
a further elongate member (20) including a plurality of spaced part points along its length, each of those spaced apart points being fixed to a respective further attachment device (22) such that the further tie assembly resists outward deformation of the tank wall.

8. A liquid storage tank (16) according to claim 7, wherein the tie assembly and one or more further tie assemblies are in a spaced apart relation within the tank, and the tie assembly and further tie assemblies are more closely spaced at or proximate to the centre of the liquid storage tank (16).

9. A liquid storage tank (16) according to claim 7, wherein the tie assembly and one or more further tie assemblies are in a spaced apart relation within the tank, and the tie assembly and further tie assemblies are more closely spaced at or proximate to the edges of the liquid storage tank (16).

10. A liquid storage tank (16) according to any of claims 1 to 9, wherein multiple attachment devices (22) are formed on a common elongate bracket which is fixed to the internal surface of the tank wall.

11. A liquid storage tank (16) according to any of claims 1 to 10, wherein the total cavity volume of the tie assembly and/or further tie assemblies in the liquid storage space (14) is less than or equal to 5% by volume of the liquid storage space volume.

12. A liquid storage tank (16) according to any of claims 1 to 11, wherein the tank is an aircraft fuel tank.

13. A vehicle comprising a liquid storage tank (16) according to any of claims 1 to 12.

14. A method of installing a tie assembly in a liquid storage tank (16), the tie assembly comprising an elongate member (20) and a plurality of attachment devices (22), the method comprising:
fixing each attachment device (22) to an inner surface of a tank wall of the a liquid storage tank (16); and
fixing the elongate member (20) to spaced apart attachment devices (22) such that each of a plurality of spaced part points along the length of the elongate member (20) is fixed to a respective attachment device (22), thereby installing the tie assembly in the liquid storage tank (16) such that the tie assembly resists outward deformation of the tank wall.

15. A method according to claim 15, wherein:
the elongate member (20) comprises one or more wires; and
the method further includes, after fixing the elongate member (20) to spaced apart attachment devices (22), tightening the elongate member (20) such that the tie assembly exerts an inward force on the tank wall.
